# EUROPÄISCHE PATENTSCHRIFT

(11) **EP 3 769 169 B1**
(45) Veröffentlichungstag und Bekanntmachung des Hinweises auf die Patenterteilung: **20.04.2022**
(21) Anmeldenummer: 19706521.2
(22) Anmeldetag: 18.02.2019
(51) Int. Cl.: G05B 19/042

(54) **VERFAHREN UND SYSTEM ZUM SPEICHERN VON GERÄTEBEZOGENEN DATEN VON FELDGERÄTEN IN EINER CLOUD**
METHOD AND SYSTEM FOR STORING OF DEVICE-RELATED DATA RELATING TO FIELD DEVICES IN A CLOUD
PROCÉDÉ ET SYSTÈME DE MÉMORISATION DE DONNÉES RELATIVES À DES APPAREILS DE TERRAIN DANS UN NUAGE

(30) Priorität: 20.03.2018 DE 102018106514
(43) Veröffentlichungstag der Anmeldung: 27.01.2021
(73) Patentinhaber: Endress+Hauser Process Solutions AG, 4153 Reinach (CH)
(72) Erfinder: PÖSCHMANN, Axel, 4057 Basel (CH); MAYER, Michael, 4104 Oberwil (CH); MANEVAL, Michael, 79650 Schopfheim (DE)
(74) Vertreter: Andres, Angelika Maria
(86) Internationale Anmeldenummer: PCT/EP2019/053931
(87) Internationale Veröffentlichungsnummer: WO 2019/179704

(56) Entgegenhaltungen:
- DE-A1-102015 113 979
- DE-A1-102015 120 731
- DE-A1-102016 207 058

## Beschreibung

Die Erfindung betrifft ein Verfahren zum Speichern von Daten zu mindestens einem von Gerätezustand, Gerätediagnose und Kalibrierung eines Feldgeräts in einer Cloud. Darüber hinaus betrifft die Erfindung ein Feldbussystem, das ein Feldgerät und eine Cloud umfasst.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zusätzlich zu den eigentlichen Messwerten erfassen moderne Feldgeräte während des Betriebs Daten zu Gerätezustand, Gerätediagnose und Kalibrierung des Feldgeräts, um auf diese Weise zu überwachen und zu dokumentieren, dass das Feldgerät ordnungsgemäß arbeitet und die gelieferten Messwerte korrekt sind. Viele Geräte sind zu diesem Zweck mit einer Selbstüberwachungsfunktionalität ausgestattet, die beispielsweise Funktionalitäten zur Erfassung des Gerätezustands, zur Gerätediagnose und zur Durchführung von Selbsttests beinhalten kann. Abweichungen von der normalen Funktion sowie fehlerhafte Messwerte können auf diese Weise frühzeitig erkannt werden.

Die DE 10 2015 120731 A1 und die DE 10 2015 113979 A1 offenbaren Verfahren, in welchem Feldgeräte selbstständig Applikationsinformationen und Parametersätze an die Cloud übermitteln. Aus dem gesammelten Datenschatz können anschließend per BigData-Algorithmen optimale Parametersätze für bestimmte Applikationen erstellt werden.

Die DE 10 2016 207058 A1 offenbart ein Verfahren, bei welchem eine Diagnosevorrichtung Diagnosedaten aus einem Feldgerät ausliest. Diese Diagnosedaten können anschließend an eine Servicestation übertragen werden.

Aufgabe der Erfindung ist es, ein Verfahren bereitzustellen, das eine verbesserte Darstellung und Auswertung von Daten eines Feldgeräts zu mindestens einem von Gerätezustand, Gerätediagnose und Kalibrierung ermöglicht.

Gelöst wird diese Aufgabe durch die in den Ansprüchen 1 und 15 angegebenen Merkmale.

Vorteilhafte Weiterentwicklungen der Erfindung sind in den Unteransprüchen angegeben.

Ein Verfahren gemäß den Ausführungsformen der Erfindung dient zum Speichern von Daten zu mindestens einem von Gerätezustand, Gerätediagnose und Kalibrierung eines Feldgeräts in einer Cloud. Dabei weist das Feldgerät eine Selbstüberwachungsfunktionalität auf. Das Verfahren umfasst das geräteinterne Erfassen von ersten Daten zu mindestens einem von Gerätezustand, Gerätediagnose und Kalibrierung durch das Feldgerät selbst und das Übermitteln der geräteintern erfassten ersten Daten vom Feldgerät an die Cloud. Außerdem umfasst das Verfahren das Erfassen von zweiten Daten zu mindestens einem von Gerätezustand, Gerätediagnose und Kalibrierung des Feldgeräts mittels eines externen Servicerechners und das Übermitteln der zweiten Daten vom externen Servicerechner an die Cloud. Sowohl die ersten Daten als auch die zweiten Daten werden in der Cloud gespeichert. Die Schritte des Verfahrens können in beliebiger Reihenfolge ausgeführt werden. Die Schritte können nacheinander, aber auch gleichzeitig oder einander überlappend ausgeführt werden.

Viele Feldgeräte sind mit einer Selbstüberwachungsfunktionalität ausgestattet, die die Funktionsfähigkeit des Feldgeräts während des laufenden Betriebs überwacht und so die Richtigkeit der gelieferten Messwerte sicherstellt. Für die Feldgeräte von Endress+Hauser wird eine derartige Selbstüberwachungsfunktionalität beispielsweise unter der Bezeichnung "Heartbeat" angeboten. Dabei kann die Selbstüberwachungsfunktionalität beispielsweise das geräteinterne Auslesen und Überwachen eines Satzes von Geräteparametern umfassen. Die Selbstüberwachungsfunktionalität kann beispielsweise das Erfassen und Verfolgen des Gerätezustands des Feldgeräts umfassen. Erfindungsgemäß umfasst die Selbstüberwachungsfunktionalität darüber hinaus die Durchführung eines Selbsttests, wobei im Rahmen des Selbsttests eine Funktionsprüfung von Komponenten des Feldgeräts durchgeführt wird. Durch die Selbstüberwachungsfunktionalität in ihren unterschiedlichen Varianten können geräteintern erste Daten zu mindestens einem von Gerätezustand, Gerätediagnose und Kalibrierung erfasst werden, die vom Feldgerät aus in die Cloud übermittelt und dort gespeichert werden.

Darüber hinaus werden die Feldgeräte in der Regel von Zeit zu Zeit gewartet und neu kalibriert. Die bei der Abwicklung eines derartigen Wartungs- oder Kalibrierauftrags anfallenden Daten werden mittels eines externen Servicerechners erfasst. Unter einem "externen Servicerechner" ist dabei ein Rechner zu verstehen, der nicht permanent mit dem Feldgerät und dem Feldbusnetzwerk des Feldgeräts verbunden ist, sondern der allenfalls vorübergehend während des Serviceeinsatzes mit dem Feldgerät verbunden wird. Der externe Servicerechner ist also nicht Teil des Feldbusnetzwerks.

Die durch den externen Servicerechner erfassten zweiten Daten zu mindestens einem von Gerätezustand, Gerätediagnose und Kalibrierung werden gemäß der vorliegenden Erfindung ebenfalls in die Cloud übermittelt und dort gespeichert. Dabei kann die Übermittlung der zweiten Daten in die Cloud entweder direkt oder indirekt erfolgen. Bei der direkten Übermittlung werden die vom externen Servicerechner erfassten Daten vom externen Servicerechner aus über eine Datenverbindung direkt in die Cloud übermittelt und dort gespeichert, wobei es sich bei der Datenverbindung beispielsweise um eine Drahtlosverbindung handeln kann. Die zweiten Daten können jedoch auch indirekt in die Cloud übermittelt werden. Beispielsweise kann der externe Servicerechner die Daten zunächst zu einer zentralen Datenverarbeitungseinrichtung übertragen, in der beispielsweise die Daten zu Serviceeinsätzen gespeichert sind. Von dort aus können die Daten dann über eine weitere Datenverbindung zur Cloud übermittelt und dort gespeichert werden.

Auf diese Weise ist es möglich, die geräteintern erfassten ersten Daten und die durch den externen Servicerechner erfassten zweiten Daten in der Cloud zusammenzuführen. Dadurch wird insbesondere eine gemeinsame Darstellung und Auswertung der ersten und der zweiten Daten ermöglicht. Durch die Zusammenschau dieser Daten wird eine neuartige Gesamtübersicht über den Gerätezustand möglich. Beispielsweise können die ersten und die zweiten Daten zu mindestens einem von Gerätezustand, Gerätediagnose und Kalibrierung in ihrer zeitlichen Reihenfolge grafisch visualisiert werden. Darüber hinaus ist es beispielsweise möglich, die geräteintern erfassten ersten Daten zur Kalibrierung, welche beispielsweise bei einem Selbsttest ermittelt werden, zusammen mit den vom Servicerechner erfassten zweiten Daten zur Kalibrierung darzustellen. Die Ergebnisse geräteinterner Selbsttests können beispielsweise zusammen mit Ergebnissen einer externen Kalibrierung, welche beispielsweise mittels eines Kalibrators durchgeführt wird, verglichen werden. Da diese Kalibrierdaten bei einwandfrei funktionierenden Geräten übereinstimmen, wird durch diese Vergleichsmöglichkeit die Akzeptanz und die Glaubwürdigkeit der geräteintern durchgeführten Selbsttests unterstützt. Durch das gemeinsame Abspeichern von ersten und zweiten Daten in der Cloud wird eine chronologische Dokumentation geschaffen. Wenn zu überprüfen ist, ob ein Feldgerät beispielsweise während der Produktion einer bestimmten Charge einwandfrei funktioniert hat, kann auf die abgespeicherten Daten in der Cloud zurückgegriffen werden.

Gemäß einem bevorzugten Ausführungsbeispiel werden die ersten Daten zu dem Feldgerät und die zweiten Daten zu dem Feldgerät in der Cloud in einem dem Feldgerät zugeordneten Eintrag zusammengeführt. Erfindungsgemäß werden die zur Cloud übermittelten Daten in Einträgen, die jeweils einem bestimmten Feldgerät zugeordnet sind, gespeichert, wobei ein Eintrag in der Cloud zu einem Feldgerät anhand einer für das Feldgerät charakteristischen Kennung identifizierbar ist. Erfindungsgemäß werden die zur Cloud übermittelten Daten in Einträgen, die jeweils einem bestimmten Feldgerät zugeordnet sind, gespeichert, wobei ein Eintrag in der Cloud zu einem Feldgerät anhand einer für das Feldgerät charakteristischen Kennung identifizierbar ist, wobei es sich bei der charakteristischen Kennung um eine von folgenden handelt: Hersteller und Seriennummerdes Feldgeräts, eine UUID (Universal Unique Identifier) des Feldgeräts, eine MAC-Adresse einer Netzwerkkarte des Feldgeräts, eine eindeutige Kennung einer SIM-Karte des Feldgeräts. Sowohl in die Cloud übermittelten ersten Daten als auch die in die Cloud übermittelten zweiten Daten werden vorzugsweise gemäß der jeweiligen Kennung des Feldgeräts, die zusammen mit den ersten und zweiten Daten übermittelt wird, in der Cloud den Einträgen zu den verschiedenen Feldgeräten zugeordnet. Auf diese Weise können die ersten Daten zu einem Feldgerät und die zweiten Daten zu einem Feldgerät in der Cloud zusammengeführt werden.

Gemäß einem bevorzugten Ausführungsbeispiel umfasst das Verfahren das Abrufen von zumindest einem Teil der ersten Daten und von zumindest einem Teil der zweiten Daten zu einem oder mehreren Feldgeräten aus der Cloud durch eine Auswerteeinheit, die dazu ausgelegt ist, die abgerufenen Daten auszuwerten und/oder darzustellen. Dabei kann die Auswerteeinheit beispielsweise als in der Cloud ausführbare Auswerteeinheit ausgebildet sein. Alternativ dazu kann die Auswerteeinheit beispielsweise als eine auf einem Drittrechner ausführbare Auswerteeinheit ausgebildet sein, die dazu ausgebildet ist, vom Drittrechner aus Daten aus der Cloud abzurufen und die abgerufenen Daten auszuwerten und/oder auf einem Display darzustellen. Mittels der Auswerteeinheit kann sich der Benutzer einen Überblick über den Zustand der Feldgeräte eines Feldbussystems verschaffen.

Gemäß einem bevorzugten Ausführungsbeispiel werden in der Cloud erste und zweite Daten von mehreren Feldgeräten, die sich an unterschiedlichen Standorten und/oder in verschiedenen Feldbusnetzwerken befinden, gespeichert. Gemäß einer bevorzugten Lösung ist die Auswerteeinheit dazu ausgelegt, zumindest einen Teil der ersten Daten und zumindest einen Teil der zweiten Daten zu mehreren Feldgeräten, die sich an unterschiedlichen Standorten und/oder in verschiedenen Feldbusnetzwerken befinden, aus der Cloud abzurufen und auszuwerten und/oder auf einem Display darzustellen. Die standortübergreifende Auswertung der ersten und zweiten Daten ermöglicht beispielsweise, die in der Cloud gespeicherten Daten gemäß einem vorgebbaren Filterkriterium zu filtern und auf diese Weise beispielsweise Daten eines bestimmten Typs von Feldgerät, eines bestimmten Messprinzips oder eines in einer bestimmten Einbauumgebung betriebenen Feldgeräts herauszufiltern. Dadurch ist es beispielsweise möglich, eine systematische Messwertdrift bei bestimmten Typen von Feldgeräten oder in bestimmten Einsatzumgebungen zu erkennen. Darüber hinaus kann beispielsweise mittels eines Mittelungsverfahrens oder anderer statistischer Verfahren bzw. Auswertungen ein typisches Geräteverhalten für einen bestimmten Gerätetyp oder eine bestimmte Einsatzumgebung ermittelt werden, wobei die gemittelten Daten beispielsweise als Performancereferenz für den Gerätetyp oder die Einsatzumgebung verwendet werden können.

Ein Feldbussystem entsprechend den Ausführungsformen der Erfindung umfasst ein Feldgerät, das eine Selbstüberwachungsfunktionalität aufweist und dazu ausgelegt ist, geräteintern erste Daten zu mindestens einem von Gerätezustand, Gerätediagnose und Kalibrierung des Feldgeräts zu erfassen, sowie eine Cloud, wobei die geräteintern erfassten ersten Daten vom Feldgerät an die Cloud übertragbar sind. Zweite Daten zu mindestens einem von Gerätezustand, Gerätediagnose und Kalibrierung des Feldgeräts sind mittels eines externen Servicerechners erfassbar und an die Cloud übertragbar. Die in der Cloud gespeicherten Daten umfassen sowohl die geräteintern erfassten ersten Daten als auch durch den externen Servicerechner erfasste zweite Daten.

Nachfolgend ist die Erfindung anhand von in der Zeichnung dargestellten Ausführungsbeispielen näher erläutert. Es zeigen:
Figur 1 ein Feldgerät, das mit einer Selbstüberwachungsfunktionalität ausgestattet ist;
Figur 2 die Übermittlung von ersten Daten, die geräteintern in einem Feldgerät erfasst werden, und von zweiten Daten, die durch einen externen Servicerechner erfasst werden, an eine Cloud;
Figur 3 ein standortübergreifendes Zusammenführen von ersten und zweiten Daten von Feldgeräten in verschiedenen Feldbusnetzwerken in der Cloud.

Feldgeräte für den Einsatz in der Prozessautomatisierungstechnik werden in zunehmendem Maß mit Funktionen zur Selbstüberwachung, Selbstdiagnose und zum Selbsttest ausgestattet. Eine derartige im Feldgerät selbst vorgesehene Selbstüberwachungsfunktionalität erlaubt es, während des Betriebs den Zustand des Feldgeräts zu überwachen. Die Selbstüberwachungsfunktionalität ermöglicht eine frühzeitige Erkennung von Fehlfunktionen von einzelnen Komponenten des Feldgeräts sowie von fehlerhaften Messwerten und leistet so einen Beitrag zum zuverlässigen Betrieb des Feldgeräts.

Von der Firma Endress+Hauser werden unter dem Oberbegriff "Heartbeat-Technologie" verschiedene Funktionalitäten zur Selbstüberwachung von Feldgeräten zur Verfügung gestellt. Diese Funktionalitäten können zum Beispiel Funktionalitäten zur Diagnose des Feldgeräts, zur Verifikation des Feldgeräts und zum Monitoring von Geräteparametern des Feldgeräts umfassen. Diese Funktionalitäten zur Selbstüberwachung werden von der Firma Endress+Hauser unter den Bezeichnungen "Heartbeat Diagnosis", "Heartbeat Verification" und "Heartbeat Monitoring" angeboten. Im Folgenden sind diese verschiedenen Funktionen zur Selbstüberwachung eines Feldgeräts, die sich gegenseitig ergänzen, näher beschrieben.

Bei dem Verfahren zur Verifikation führt das Gerät einen Selbsttest seiner Komponenten durch, um so die korrekte Funktion des Feldgeräts zu verifizieren. Der Geräteselbsttest kann durchgeführt werden, ohne dass das Feldgerät hierzu aus seiner Einbauumgebung ausgebaut werden muss. Vorzugsweise wird der Geräteselbsttest auf einen expliziten Befehl des Benutzers hin durchgeführt. Alternativ dazu ist es jedoch auch möglich, den Selbsttest beispielsweise in vorgegebenen Zeitintervallen automatisch durchzuführen.

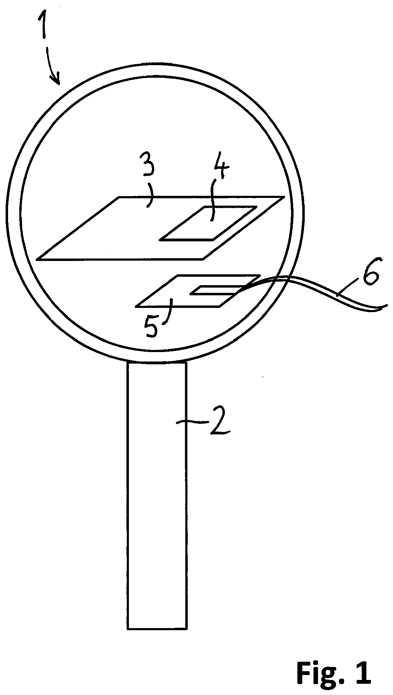

In Figur 1 ist als Beispiel ein Füllstandsmessgerät 1 gezeigt, das mit einer Funktion zum Geräteselbsttest ausgestattet ist. Das Füllstandsmessgerät 1 umfasst einen Sensor 2 zur Erfassung des Füllstands, ein Hauptelektronikmodul 3 zur Auswertung des Sensorsignals, mindestens einen Speicher 4 zum Speichern von Programmen und Messwerten sowie ein IO-Modul 5, das das Ausgangssignal über das Anschlusskabel 6 des Feldgeräts ausgibt. Zur Durchführung des Selbsttests ist das Füllstandsmessgerät 1 mit zusätzlicher Prüfelektronik versehen, die dazu ausgelegt ist, die Funktion der einzelnen Komponenten des Füllstandsmessgeräts 1 zu überprüfen. Durch die Prüfelektronik können zumindest einige der Komponenten des Feldgeräts, also beispielsweise der Sensor 2, das Hauptelektronikmodul 3, der mindestens eine Speicher 4, das IO-Modul 5 sowie das Anschlusskabel 6, auf ihr ordnungsgemäßes Funktionieren hin überprüft werden. Der Selbsttest des Füllstandsmessgeräts 1 liefert eines der beiden möglichen Ergebnisse "bestanden" oder "nicht bestanden". Im Testergebnis können beispielsweise auch separate Einzelergebnisse für die unterschiedlichen Komponenten des Füllstandsmessgeräts 1 enthalten sein. Das Feldgerät hat den Test dann bestanden, wenn alle überprüften Komponenten funktionsfähig sind. Das Ergebnis des Selbsttests wird vorzugsweise in Form eines Testzertifikats dokumentiert. Derartige Testzertifikate werden beispielsweise vom TÜV in gewissem Umfang als Nachweis für das ordnungsgemäße Funktionieren des Feldgeräts anerkannt. Insbesondere können derartige Testzertifikate zumindest für eine bestimmte Zeitspanne an die Stelle einer Neukalibrierung des Geräts treten. Während der Selbsttest im eingebauten Zustand des Feldgeräts durchgeführt werden kann, ist für eine Neukalibrierung unter Umständen ein Ausbau des Geräts aus seiner Messumgebung erforderlich.

Darüber hinaus kann das Feldgerät mit einer Funktion zur Diagnose ausgestattet sein, die eine kontinuierliche Selbstüberwachung des Feldgeräts ermöglicht. Die Diagnosefunktion erfasst den Gerätezustand des Feldgeräts und erzeugt in vorgegebenen zeitlichen Abständen standardisierte Gerätediagnosemeldungen, wobei diese Meldungen zusätzlich beispielsweise Handlungsanweisungen zur Fehlerbehebung umfassen können. Die aktuelle Gerätediagnose wird dem Benutzer durch geeignete Status- und Fehlermeldungen angezeigt. Vorzugsweise wird die aktuelle Gerätediagnose einem von mehreren standardisierten Gerätezuständen zugeordnet. Zur Klassifizierung des aktuellen Gerätezustands können beispielsweise die sogenannten NAMUR-Gerätezustände verwendet werden, die im Standard NAMUR NE 107 definiert sind. Gemäß diesem Standard wird der erfasste Gerätezustand einem von fünf möglichen Zuständen zugeordnet, wobei für die Darstellung der fünf Zustände eine vereinheitlichte Farbgebung und Symbolik verwendet wird. Ein grünes Symbol zeigt an, dass ein gültiges Prozesssignal im regulären Betrieb vorliegt. Ein blaues Symbol signalisiert ein gültiges Prozesssignal, wobei jedoch Wartungsbedarf besteht. Durch ein gelbes Symbol wird angezeigt, dass das Signal außerhalb der Spezifikation liegt. Ein oranges Symbol steht für ein vorübergehend ungültiges Signal bei Funktionsprüfungen und ein rotes Symbol zeigt ein ungültiges Signal bei Fehler an. Durch die vereinheitlichten farbigen Symbole, die den verschiedenen Gerätezuständen zugeordnet sind, erhält der Benutzer einen schnellen Überblick über den aktuellen Gerätezustand eines Feldgeräts.

Zusätzlich kann eine Funktion zum Monitoring des Feldgeräts vorgesehen sein, um ausgewählte Geräteparameter des Feldgeräts zu überwachen. Aus den Parametern des Feldgeräts wird ein spezifischer Satz von Geräteparametern ausgewählt und überwacht. Vorzugsweise charakterisieren die ausgewählten Parameter oder zumindest einige der ausgewählten Parameter mindestens eines von Gerätezustand, Gerätediagnose und Kalibrierung des Feldgeräts. Die ausgewählten Parameter werden gemäß einem vorgegebenen zeitlichen Schema, vorzugsweise in regelmäßigen Abständen aus dem Feldgerät ausgelesen und ausgewertet. Beispielsweise können die ausgelesenen Parameterwerte mit vorgegebenen Sollwerten oder Sollwertbereichen verglichen werden, um auf diese Weise zu überwachen, ob sich das Feldgerät in einem vorgegebenen Sollzustand befindet. Darüber hinaus können durch die Verfolgung der ausgewählten Geräteparameter Veränderungen und Trends der überwachten Parameter frühzeitig erkannt werden. Derartige Veränderungen können beispielsweise durch Prozesseinflüsse oder durch systematische Fehler hervorgerufen werden. Durch das Monitoring der ausgewählten Parameter werden derartige Veränderungen frühzeitig erkannt. Dies ermöglicht eine vorausschauende Planung von Maßnahmen wie zum Beispiel Reinigung oder Wartung des Feldgeräts.

Die Daten zu einem Feldgerät, die innerhalb des Feldgeräts durch die verschiedenen Funktionen zur Selbstüberwachung erfasst werden, können zur Dokumentation des Gerätezustands in eine Cloud geschrieben werden. Dabei können die an die Cloud übermittelten Daten Daten zu mindestens einem von Gerätezustand, Gerätediagnose und Kalibrierung umfassen, insbesondere beispielsweise Werte von ausgewählten Parametern und Ergebnisse von Selbsttests. Eine derartige fortlaufende Dokumentation des Gerätezustands ist insbesondere bei sicherheitskritischen Verfahren wie beispielsweise bei der Herstellung von Pharmazeutika, Lebensmitteln und Getränken erforderlich, damit für die verschiedenen Chargen die Fehlerfreiheit der Messergebnisse dokumentiert werden kann.

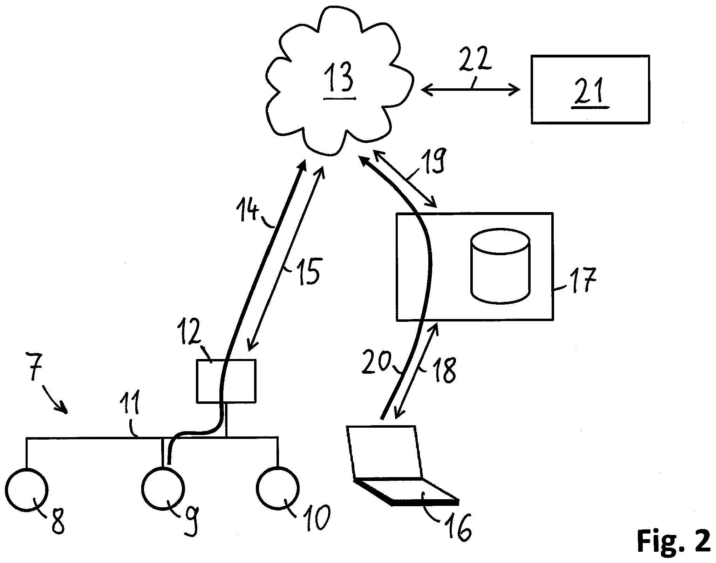

Figur 2 zeigt ein Feldbusnetzwerk 7 mit mehreren Feldgeräten 8, 9, 10, die an einen Feldbus 11 angeschlossen sind. An den Feldbus 11 ist außerdem ein Edge-Gerät 12 angeschlossen, das dazu ausgelegt ist, die Datenübertragung zwischen dem Feldbusnetzwerk 7 und der Cloud 13 abzuwickeln. Es soll angenommen werden, dass mindestens eines der Feldgeräte 8, 9, 10 eine Selbstüberwachungsfunktionalität aufweist und geräteintern Daten zu mindestens einem von Gerätezustand, Gerätediagnose und Kalibrierung erfasst. Diese geräteintern erfassten ersten Daten werden dann von dem jeweiligen Feldgerät, beispielsweise vom Feldgerät 9, über einen ersten Datenübertragungspfad 14 zur Cloud 13 übertragen. Dabei kann sich der erste Datenübertragungspfad 14 vom Feldgerät 9 über den Feldbus 11 zum Edge-Gerät 12 und von dort über eine Internetverbindung 15 weiter zur Cloud 13 erstrecken. Alternativ dazu können die Daten vom Feldgerät 9 aus über eine Drahtlosverbindung zur Cloud 13 übertragen werden. Dabei können die geräteintern erfassten ersten Daten beispielsweise entsprechend einem vorgegebenen zeitlichen Schema, vorzugsweise in regelmäßigen Abständen in die Cloud 13 geschrieben werden. In der Cloud 13 existiert zum Feldgerät 9 ein Eintrag, der beispielsweise anhand einer für das Feldgerät charakteristischen Kennung identifiziert werden kann. In diesem Eintrag werden die geräteintern erfassten ersten Daten in ihrer zeitlichen Abfolge abgespeichert. Die geräteintern erfassten ersten Daten umfassen Daten zu mindestens einem von Gerätezustand, Gerätediagnose und Kalibrierung. In dem Eintrag können beispielsweise die Werte von ausgewählten Geräteparametern gespeichert werden. In dem Eintrag können darüber hinaus beispielsweise Diagnosedaten sowie NAMUR-Gerätezustände abgelegt werden, die zu einem bestimmten Zeitpunkt erfasst wurden. Außerdem können in dem Eintrag in der Cloud beispielsweise Testergebnisse von Geräteselbsttests abgelegt werden, die zu einem bestimmten Zeitpunkt durchgeführt wurden. Die Testergebnisse der Selbsttests können beispielsweise auch Kalibrierdaten und quantitative Messwerte für verschiedene Komponenten und Funktionalitäten des Feldgeräts 9 umfassen.

Im Rahmen des Betriebs der Feldgeräte 8, 9, 10 ist darüber hinaus vorgesehen, zumindest von Zeit zu Zeit, vorzugsweise in bestimmten zeitlichen Abständen eine externe Kalibrierung des jeweiligen Feldgeräts durchzuführen. Diese externe Kalibrierung wird in der Regel von einem damit beauftragten Servicetechniker durchgeführt. Häufig ist es erforderlich, das jeweilige Feldgerät für die Kalibrierung aus seiner Einbauumgebung auszubauen. Mittels eines Kalibrators können an den Sensor des Feldgeräts ein oder mehrere exakt vorgebbare Werte der jeweiligen Messgröße angelegt werden. Zur Kalibrierung eines Temperaturmessgeräts können beispielsweise eine oder mehrere unterschiedliche Temperaturen an das Feldgerät angelegt werden. Zur Kalibrierung eines Feldgeräts zur Durchflussmessung kann der Durchfluss beispielsweise mittels eines Kalibrators nacheinander auf unterschiedliche Werte eingestellt werden. Zu jedem an den Sensor angelegten Wert der Messgröße wird der vom Feldgerät ausgegebene Messwert erfasst. Der Messwert beziehungsweise die Messwerte können beispielsweise in einen externen Servicerechner 16 eingegeben oder in den Servicerechner 16 eingelesen werden. Der bei Anlegen eines definierten Werts der Messgröße vom Feldgerät ausgegebene Messwert erlaubt einen Rückschluss, ob das Feldgerät korrekt misst. Insbesondere kann beurteilt werden, ob der vom Feldgerät gelieferte Messwert noch innerhalb eines maximal zulässigen Fehlers (MPE, Maximum Permissible Error) liegt oder ob der Messwert bereits außerhalb des erlaubten Fehlerbereichs liegt. Auf der Basis der erfassten Messwerte kann der Servicetechniker eine Neuparametrierung des Feldgeräts durchführen. Hierzu wird das Feldgerät durch das Setzen geeigneter Parameter gezielt so angepasst, dass das Feldgerät zu jedem Wert der Messgröße, der vom Kalibrator bereitgestellt wird, den korrekten zugehörigen Messwert liefert.

Dabei werden durch den externen Servicerechner 16 ein oder mehrere von folgenden Daten erfasst: Daten zu Wartung, Gerätezustand, Gerätediagnose eines Feldgeräts, Daten zu den durchgeführten Messungen sowie Kalibrierdaten für die Kalibrierung des Feldgeräts. Auf dem externen Servicerechner 16 ist nach der Kalibrierung ein Datensatz zu der durchgeführten Kalibrierung gespeichert. Falls zur Kalibrierung ein Ausbau des Feldgeräts erforderlich war, kann das Feldgerät nach dem Abschluss der Kalibrierung wieder in seine ursprüngliche Messumgebung eingebaut werden.

Um die Abwicklung von Wartungs- und Kalibrieraufträgen zu erleichtern, kann eine zentrale Datenverarbeitungseinrichtung 17 vorgesehen sein, in der beispielsweise Datensätze zu den Einsätzen der Servicetechnik gespeichert werden. Die vom externen Servicerechner 16 erfassten zweiten Daten zu mindestens einem von Wartung, Gerätezustand, Gerätediagnose und Kalibrierung der gewarteten oder kalibrierten Feldgeräte können über eine Datenverbindung 18 zu dieser zentralen Datenverarbeitungseinrichtung 17 übertragen und dort gespeichert werden. Die in der zentralen Datenverarbeitungseinrichtung 17 gespeicherten Daten umfassen beispielsweise die durchgeführten Wartungs- und Kalibrierdienstleistungen, eine Auflistung der durchgeführten Maßnahmen, technische Daten zu den gewarteten oder kalibrierten Feldgeräten, die Dauer des Serviceeinsatzes, den Namen des Servicetechnikers, etc. In der zentralen Datenverarbeitungseinrichtung 17 können beispielsweise sowohl betriebswirtschaftliche Daten zu den jeweiligen Serviceeinsätzen der Servicetechniker als auch technische Daten zu mindestens einem von Wartung, Gerätezustand, Gerätediagnose und Kalibrierung der gewarteten Feldgeräten gespeichert sein. Die in der zentralen Datenverarbeitungseinrichtung 17 vorgehaltenen Daten dienen zur Dokumentation der durchgeführten Maßnahmen und als Basis für die Abrechnung gegenüber dem Kunden.

Zumindest ein Teil der zweiten Daten, die mittels des externen Servicerechners 16 erfasst und in der zentralen Datenverarbeitungseinrichtung 17 gespeichert sind, wird über eine Datenverbindung 19 in die Cloud 13 geschrieben. Hierzu wird beispielsweise derjenige Teil der Daten in der zentralen Datenverarbeitungseinrichtung 17, der sich auf mindestens eines von Wartung, Gerätezustand, Gerätediagnose und Kalibrierung bezieht, gemäß einem vorgegebenen Zeitschema, vorzugsweise in regelmäßigen Abständen, in die Cloud 13 übertragen. Zumindest ein Teil der vom externen Servicerechner 16 erfassten zweiten Daten zu mindestens einem von Wartung, Gerätezustand, Gerätediagnose und Kalibrierung wird somit über einen zweiten Datenübertragungspfad 20 in die Cloud 13 geschrieben. Der zweite Datenübertragungspfad 20 zur Übertragung der zweiten Daten erstreckt sich somit vom externen Servicerechner 16 über die zentrale Datenverarbeitungseinrichtung 17 zur Cloud 13. Alternativ dazu wäre es auch möglich, die vom externen Servicerechner 16 erfassten zweiten Daten vom externen Servicerechner 16 aus über eine Drahtlosverbindung direkt in die Cloud 13 zu schreiben. Dieser Übertragungsweg für die zweiten Daten ist insbesondere auch dann möglich, wenn das System keine zentrale Datenverarbeitungseinrichtung 17 für die Servicedaten aufweist.

Die innerhalb der Feldgeräte geräteintern erfassten ersten Daten werden über den ersten Datenübertragungspfad 14 in die Cloud 13 geschrieben, wohingegen die vom externen Servicerechner 16 erfassten zweiten Daten über den zweiten Datenübertragungspfad 20 zur Cloud 13 übermittelt werden. Innerhalb der Cloud 13 werden die geräteintern erfassten ersten Daten mit den vom externen Servicerechner 16 erfassten zweiten Daten zusammengeführt. Beispielsweise können sowohl die ersten Daten als auch die zweiten Daten zu einem bestimmten Feldgerät in einem zu dem jeweiligen Feldgerät angelegten Eintrag in der Cloud 13 abgespeichert werden. Dabei kann der zu dem Feldgerät gehörige Eintrag in der Cloud 13 beispielsweise anhand einer für das jeweilige Feldgerät charakteristischen Kennung identifiziert werden. Die geräteintern erfassten ersten Daten und die vom Servicerechner 16 erfassten zweiten Daten zu einem Feldgerät können dann entsprechend der Kennung des Feldgeräts in dem Eintrag zu diesem Feldgerät in der Cloud 13 zusammengeführt werden.

Als Kennung eines Feldgeräts können beispielsweise Hersteller und Seriennummer des Feldgeräts verwendet werden. Alternativ kann als Kennung beispielsweise eine UUID (Universal Unique Identifier) eines Feldgeräts oder eine MAC-Adresse (Media-Access-Control-Adresse) der Netzwerkkarte eines Feldgeräts oder eine eindeutige Kennung der SIM-Karte (Subscriber Identity Module) eines Feldgeräts verwendet werden. Durch das gemeinsame Abspeichern der geräteintern erfassten ersten Daten mit den vom externen Servicerechner 16 erfassten zweiten Daten wird eine gemeinsame Darstellung und/oder Auswertung dieser beiden Typen von Daten ermöglicht, die insbesondere in Hinblick auf Wartung, Gerätezustand, Gerätediagnose und Kalibrierung eine verbesserte Gesamtsicht des Geräteverhaltens ermöglicht. Auf diese Weise werden die Gerätedokumentation sowie die Nachverfolgbarkeit von Gerätezustand und Kalibrierung verbessert.

Zur Darstellung und Auswertung der erfassten Daten kann eine Auswerteeinheit 21 vorgesehen sein, die auf die in der Cloud 13 gespeicherten Daten zugreift und diese Daten darstellt und/oder auswertet. Die Auswerteeinheit 21 kann hierzu in der Cloud 13 selbst vorgesehen sein oder aber auf einem Drittrechner implementiert sein, der über eine Datenverbindung 22 auf die in der Cloud 13 gespeicherten Daten zugreift.

Vorzugsweise ist die Auswerteeinheit 21 dazu ausgelegt, die geräteintern erfassten ersten Daten zu mindestens einem von Gerätezustand, Gerätediagnose und Kalibrierung gemeinsam mit den vom externen Servicerechner 16 erfassten Daten zu mindestens einem von Wartung, Gerätezustand, Gerätediagnose und Kalibrierung darzustellen. Diese Visualisierung der Daten kann insbesondere die zeitliche Abfolge der verschiedenen erfassten Gerätezustände, Gerätediagnosen oder Kalibrierungen anzeigen. Zur grafischen Visualisierung des Gerätezustands als Funktion der Zeit eignen sich beispielsweise die grafischen Symbole der NAMUR-Gerätezustände.

Die Auswerteeinheit 21 kann vorzugsweise dazu vorgesehen sein, Ergebnisse der geräteintern durchgeführten Selbsttests zusammen mit Daten darzustellen, die im Rahmen von externen Kalibrierungen des Feldgeräts ermittelt wurden, wobei die verschiedenen Kalibrierdaten vorzugsweise als Funktion der Zeit aufgetragen werden. Auf diese Weise können die geräteintern bei Selbsttests ermittelten Kalibrierdaten und die bei einer externen Kalibrierung ermittelten Kalibrierdaten im Überblick dargestellt werden. Dadurch kann der Benutzer die intern und extern erfassten Kalibrierdaten miteinander vergleichen. Der Benutzer kann so erkennen, dass beide Kalibrierdaten übereinstimmen, so dass das Vertrauen des Kunden in die geräteintern durchgeführten Selbsttests gestärkt wird. Anhand des zeitlichen Verlaufs der Kalibrierdaten kann darüber hinaus eine Drift des vom jeweiligen Feldgerät gelieferten Messwerts erkannt werden. Die Darstellung der bisherigen Kalibrierereignisse als Funktion der Zeit gibt dem Benutzer einen Überblick über den Stand der Kalibrierung und ermöglicht darüber hinaus die Planung von zukünftigen internen Selbsttests und externen Kalibrierungen. Hierzu kann auch vorgesehen sein, dass die Auswerteeinheit 21 den Benutzer an zukünftige Selbsttests und Kalibrierungen erinnert. Darüber hinaus kann die Auswerteeinheit 21 dazu ausgelegt sein, automatisch einen Vergleich zwischen den geräteintern erfassten Kalibrierdaten, die beispielsweise im Rahmen eines Selbsttests ermittelt werden, und den externen Kalibrierungen durchzuführen. In anderen Worten kann die Auswerteeinheit 21 dazu ausgelegt sein, automatisch eine statistische Konsistenzprüfung zwischen den geräteintern erfassten Kalibrierdaten und den durch externe Kalibrierungen erfassten Kalibrierdaten durchzuführen.

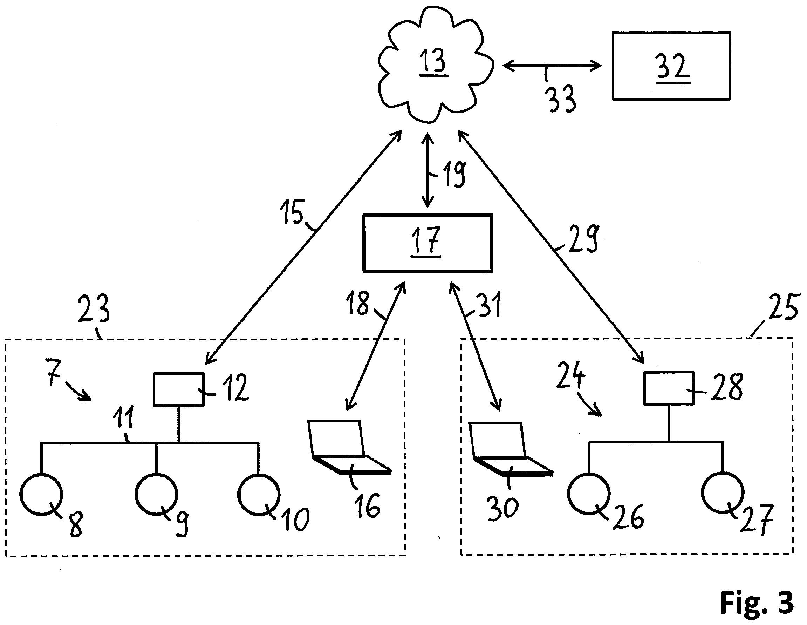

Es ist darüber hinaus möglich, in der Cloud 13 Daten zu mindestens einem von Gerätezustand, Gerätediagnose und Kalibrierung von Feldgeräten an unterschiedlichen Standorten und/oder in unterschiedlichen Feldbusnetzwerken zusammenzuführen. In Figur 3 ist schematisch gezeigt, wie sowohl Daten aus einem ersten Feldbusnetzwerk 7 am Standort 23 als auch Daten aus einem zweiten Feldbusnetzwerk 24 am Standort 25 in die Cloud 13 geschrieben werden können. Das Feldbusnetzwerk 7 umfasst die Feldgeräte 8, 9, 10, die an den Feldbus 11 angeschlossen sind, sowie das an den Feldbus 11 angeschlossene Edge-Gerät 12. Erste Daten zu mindestens einem von Gerätezustand, Gerätediagnose und Kalibrierung, die beispielsweise geräteintern im Feldgerät 9 erfasst werden, werden über das erste Edge-Gerät 12 und die Datenverbindung 15 in die Cloud 13 geschrieben. Darüber hinaus können zweite Daten zu mindestens einem von Gerätezustand, Gerätediagnose und Kalibrierung von einem der Feldgeräte 8, 9, 10 mittels des externen Servicerechners 16 erfasst und über die Datenverbindung 18 zu einer zentralen Datenverarbeitungseinrichtung 17 übermittelt werden, wobei mindestens ein Teil dieser Daten über die Datenverbindung 19 in die Cloud 13 geschrieben wird.

Analog dazu werden innerhalb des zweiten Feldbusnetzwerks 24 geräteintern in einem der Feldgeräte 26, 27 erfasste erste Daten über das Edge-Gerät 28 und eine Datenverbindung 29 in die Cloud 13 geschrieben. Darüber hinaus können mittels eines externen Servicerechners 30 erfasste zweite Daten zu einem der Feldgeräte 26, 27 des zweiten Feldbusnetzwerks 24 über eine Datenverbindung 31 zur zentralen Datenverarbeitungseinrichtung 17 übermittelt und von dort zumindest zum Teil über die Datenverbindung 19 in die Cloud 13 geschrieben werden. In der Cloud 13 können somit erste Daten und/oder zweite Daten zu Feldgeräten an unterschiedlichen Standorten und/oder in unterschiedlichen Feldbusnetzwerken zusammengeführt werden.

Zur Auswertung dieser Daten ist eine Auswerteeinheit 32 vorgesehen, die beispielsweise über eine Datenverbindung 33 mit der Cloud 13 in Verbindung steht. Von der Auswerteeinheit 32 aus können Daten zu unterschiedlichen Feldgeräten aus der Cloud 13 abgerufen und auf einem Display dargestellt und/oder ausgewertet werden. Dabei kann die Auswerteeinheit 32 dazu ausgelegt sein, Daten zu denjenigen Feldgeräten aus der Cloud abzurufen, die vom Benutzer spezifizierbaren Filterkriterien entsprechen. Beispielsweise kann der Benutzer einen Feldgerätetyp, ein bestimmtes Messprinzip oder eine bestimmte Einbauumgebung oder Messanwendung als Filterkriterium angeben, wobei dann lediglich diejenigen Daten aus der Cloud 13 zur Auswerteeinheit 32 übertragen werden, die dem vorgegebenen Filterkriterium entsprechen. Diese Daten zu mindestens einem von Gerätezustand, Gerätediagnose und Kalibrierung können einzeln oder gemeinsam dargestellt und/oder ausgewertet werden. Beispielsweise ist es möglich, auf erste und/oder zweite Daten zu ausgewählten Feldgeräten, die einem vorgegebenen Filterkriterium entsprechen, ein Mittelungsverfahren anzuwenden, um auf diese Weise gemittelte Daten zu erzeugen, die ein typisches Geräteverhalten der ausgewählten Feldgeräte widerspiegeln. Dieses gemittelte Geräteverhalten kann dann als Referenz für all diejenigen Feldgeräte verwendet werden, die dem vorgegebenen Auswahlkriterium entsprechen. Aufgrund der umfangreichen Datenbasis kann standortübergreifend ein typisches Geräteverhalten beispielsweise für einen bestimmten Feldgerätetyp, aber auch für Feldgeräte mit einem bestimmten Messprinzip oder in einer bestimmten Messanwendung oder Einbauumgebung ermittelt werden, welches dann als Referenz für die jeweiligen Feldgeräte verwendbar ist.

## Patentansprüche

1. Verfahren zum Speichern von Daten zu mindestens einem von Gerätezustand, Gerätediagnose und Kalibrierung eines Feldgeräts (8, 9, 10, 26, 27) in einer Cloud (13), wobei das Feldgerät (8, 9, 10, 26, 27) eine Selbstüberwachungsfunktionalität aufweist, wobei das Verfahren umfasst:
geräteinternes Erfassen von ersten Daten zu mindestens einem von Gerätezustand, Gerätediagnose und Kalibrierung durch das Feldgerät (8, 9, 10, 26, 27) selbst, umfassend das Durchführen eines Geräteselbsttest, wobei im Rahmen eines Selbsttests mindestens eines von folgenden zu überprüft wird: einen Sensor des Feldgeräts, eine Auswerteelektronik des Feldgeräts, mindestens einen Speicher des Feldgeräts, eine IO-Einrichtung des Feldgeräts, mindestens eine Anschlussleitung des Feldgeräts, ein Ausgangssignal des Feldgeräts,
Übermitteln der geräteintern erfassten ersten Daten vom Feldgerät (8, 9, 10, 26, 27), umfassend das Ergebnis des Geräteselbsttests, an die Cloud (13),
Erfassen von zweiten Daten zu mindestens einem von Gerätezustand, Gerätediagnose und Kalibrierung des Feldgeräts (8, 9, 10, 26, 27) mittels eines externen Servicerechners (16, 30) und Übermitteln der zweiten Daten vom externen Servicerechner (16, 30) an die Cloud (13), wobei der externe Servicerechner dazu ausgelegt ist, im Rahmen einer Kalibrierung Kalibrierdaten des Feldgeräts zu erfassen, wobei die vom externen Servicerechner zur Cloud übertragenen zweiten Daten zumindest einen Teil der erfassten Kalibrierdaten des Feldgeräts umfassen,
wobei sowohl die ersten Daten als auch die zweiten Daten in der Cloud (13) gespeichert werden, wobei die zur Cloud übermittelten Daten in Einträgen, die jeweils einem bestimmten Feldgerät zugeordnet sind, gespeichert werden, wobei ein Eintrag in der Cloud zu einem Feldgerät anhand einer für das Feldgerät charakteristischen Kennung identifizierbar ist.

2. Verfahren nach Anspruch 1, **dadurch gekennzeichnet, dass** das Feldgerät dazu ausgelegt ist, Daten zu mindestens einem von Gerätezustand und Gerätediagnose gemäß einem vorgegebenen zeitlichen Schema geräteintern zu erfassen und an die Cloud zu übermitteln.

3. Verfahren nach Anspruch 1 oder 2, **gekennzeichnet durch**:
- das Feldgerät ist dazu ausgelegt, erfasste Daten zu mindestens einem von Gerätezustand und Gerätediagnose einem aus einer Menge von vordefinierten Gerätezuständen zuzuordnen.

4. Verfahren nach einem der Ansprüche 1 bis 3, **dadurch gekennzeichnet, dass** die geräteintern erfassten ersten Daten über einen ersten Datenübertragungspfad in die Cloud übertragen werden und die vom externen Servicerechner erfassten zweiten Daten über einen zweiten, vom ersten Datenübertragungspfad verschiedenen Datenübertragungspfad in die Cloud übertragen werden.

5. Verfahren nach Anspruch 4, **gekennzeichnet durch** mindestens eines von folgenden:
- das Feldgerät ist Teil eines ersten Feldbusnetzwerks und die geräteintern erfassten ersten Daten werden über einen ersten Datenübertragungspfad in die Cloud übertragen, wobei sich der erste Datenübertragungspfad vom Feldgerät über das erste Feldbusnetzwerk zur Cloud erstreckt;
- das Feldgerät ist Teil eines ersten Feldbusnetzwerks und das erste Feldbusnetzwerk umfasst ein Edge-Gerät, wobei die geräteintern erfassten ersten Daten über einen ersten Datenübertragungspfad in die Cloud übertragen werden und wobei sich der erste Datenübertragungspfad vom Feldgerät über das erste Feldbusnetzwerk und das Edge-Gerät zur Cloud erstreckt;
- die geräteintern erfassten ersten Daten werden über einen ersten Datenübertragungspfad in die Cloud übertragen und die vom externen Servicerechner erfassten zweiten Daten werden über einen zweiten, vom ersten Datenübertragungspfad verschiedenen Datenübertragungspfad in die Cloud übertragen, wobei sich derzweite Datenübertragungspfad vom externen Servicerechner zu einer zentralen Datenverarbeitungseinrichtung und von dort weiter zur Cloud erstreckt.

6. Verfahren nach einem der Ansprüche 1 bis 5, **gekennzeichnet durch** mindestens eines von folgenden:
- der externe Servicerechner ist dazu ausgelegt, Daten über eine Datenverbindung an eine zentrale Datenverarbeitungseinrichtung zu übertragen, wobei zumindest ein Teil der in der zentralen Datenverarbeitungseinrichtung gespeicherten Daten über eine weitere Datenverbindung in die Cloud übermittelt wird.

7. Verfahren nach einem der Ansprüche 1 bis 6, **gekennzeichnet dadurch dass** es sich bei der charakteristischen Kennung um eine von folgenden handelt: Hersteller und Seriennummer des Feldgeräts, eine UUID des Feldgeräts, eine MAC-Adresse einer Netzwerkkarte des Feldgeräts, eine eindeutige Kennung einer SIM-Karte des Feldgeräts.

8. Verfahren nach einem der Ansprüche 1 bis 6, **gekennzeichnet durch** folgenden zusätzlichen Schritt:
Abrufen von zumindest einem Teil der ersten Daten und von zumindest einem Teil der zweiten Daten zu einem oder mehreren Feldgeräten aus der Cloud durch eine Auswerteeinheit, die dazu ausgelegt ist, die abgerufenen Daten auszuwerten und/oder darzustellen.

9. Verfahren nach Anspruch 8, **gekennzeichnet durch** mindestens eines von folgenden:
- die Auswerteeinheit ist dazu ausgelegt, erste Daten und zweite Daten zu einem Feldgerät auf einem Display gemeinsam darzustellen;
- die Auswerteeinheit ist dazu ausgelegt, erste und zweite Daten zur Kalibrierung eines Feldgeräts in Abhängigkeit vom Erfassungszeitpunkt der Daten auszuwerten und eine Drift des Messwerts des Feldgeräts zu ermitteln.

10. Verfahren nach einem der Ansprüche 1 bis 9, **dadurch gekennzeichnet, dass** das Feldgerät Teil eines ersten Feldbusnetzwerks ist, wobei das Verfahren folgende zusätzliche Schritte umfasst:
geräteinternes Erfassen von weiteren ersten Daten zu mindestens einem von Gerätezustand, Gerätediagnose und Kalibrierung durch ein zweites Feldgerät, das an ein zweites Feldbusnetzwerk angeschlossen ist, wobei das zweite Feldbusnetzwerk vom ersten Feldbusnetzwerk verschieden ist, und Übermitteln der geräteintern erfassten weiteren ersten Daten vom zweiten Feldgerät in die Cloud, und
Erfassen von weiteren zweiten Daten zu mindestens einem von Gerätezustand, Gerätediagnose und Kalibrierung eines zweiten Feldgeräts, das an ein zweites Feldbusnetzwerk angeschlossen ist, mittels des externen Servicerechners oder mittels eines weiteren externen Servicerechners und Übermitteln der weiteren zweiten Daten vom externen Servicerechner in die Cloud.

11. Verfahren nach Anspruch 10, **dadurch gekennzeichnet, dass** sich das erste Feldbusnetzwerk an einem ersten Standort befindet und dass sich das zweite Feldbusnetzwerk an einem zweiten, vom ersten Standort verschiedenen Standort befindet.

12. Verfahren nach Anspruch 10 oder 11, **gekennzeichnet durch** mindestens eines von folgenden:
- die Auswerteeinheit ist dazu ausgelegt, zumindest einen Teil der ersten Daten und zumindest einen Teil der zweiten Daten von mehreren Feldgeräten aus der Cloud abzurufen und auszuwerten und/oder auf einem Display darzustellen;
- die Auswerteeinheit ist dazu ausgelegt, zumindest einen Teil der ersten Daten und zumindest einen Teil der zweiten Daten zu mehreren Feldgeräten, die sich an unterschiedlichen Standorten und/oder in verschiedenen Feldbusnetzwerken befinden, aus der Cloud abzurufen und auszuwerten und/oder auf einem Display darzustellen;
- die Auswerteeinheit ist dazu ausgelegt, Feldgeräte, zu denen in der Cloud erste Daten und/oder zweite Daten gespeichert sind, gemäß mindestens einem vorgebbaren Auswahlkriterium auszuwählen, Daten der ausgewählten Feldgeräte aus der Cloud abzurufen und gemeinsam auszuwerten und/oder darzustellen;
- die Auswerteeinheit ist dazu ausgelegt, Feldgeräte, zu denen in der Cloud erste Daten und/oder zweite Daten gespeichert sind, gemäß mindestens einem vorgebbaren Auswahlkriterium auszuwählen, Daten der ausgewählten Feldgeräte aus der Cloud abzurufen und gemeinsam auszuwerten und/oder darzustellen, wobei es sich bei dem mindestens einen vorgebbaren Auswahlkriterium um mindestens eines von Gerätetyp, Messprinzip, Einsatzbedingungen des Feldgeräts handelt;

13. Verfahren nach einem der Ansprüche 7 bis 11, **gekennzeichnet durch**:
- die Auswerteeinheit ist dazu ausgelegt, Feldgeräte, zu denen in der Cloud erste Daten und/oder zweite Daten gespeichert sind, gemäß mindestens einem vorgebbaren Auswahlkriterium auszuwählen, Daten der ausgewählten Feldgeräte aus der Cloud abzurufen und ausgehend von den abgerufenen Daten ein gemitteltes Geräteverhalten zu bestimmen, welches als Performancereferenz für Feldgeräte der jeweiligen Art verwendbar ist.

14. Verfahren nach einem der Ansprüche 7 bis 13, **gekennzeichnet durch** eines von folgenden:
- die Auswerteeinheit ist als in der Cloud ausführbare Auswerteeinheit ausgebildet;
- die Auswerteeinheit ist als auf einem Drittrechner ausführbare Auswerteeinheit ausgebildet und dazu ausgelegt, vom Drittrechner aus Daten aus der Cloud abzurufen.

15. Ein Feldbussystem, welches zum Durchführen eines Verfahrens nach einem der Ansprüche 1 bis 14 ausgestaltet ist, umfassend:
ein Feldgerät (8, 9, 10, 26, 27), das eine Selbstüberwachungsfunktionalität aufweist und dazu ausgelegt ist, geräteintern erste Daten zu mindestens einem von Gerätezustand, Gerätediagnose und Kalibrierung des Feldgeräts (8, 9, 10, 26, 27) zu erfassen,
eine Cloud (13), wobei die geräteintern erfassten ersten Daten vom Feldgerät (8, 9, 10, 26, 27) an die Cloud (13) übertragbar sind,
wobei zweite Daten zu mindestens einem von Gerätezustand, Gerätediagnose und Kalibrierung des Feldgeräts (8, 9, 10, 26, 27) mittels eines externen Servicerechners (16, 30) erfassbar und an die Cloud (13) übertragbar sind, und
wobei die in der Cloud (13) gespeicherten Daten sowohl die geräteintern erfassten ersten Daten als auch durch den externen Servicerechner (16, 30) erfasste zweite Daten umfassen.

## Claims

1. Procedure for the storage data on at least one of the following: the device condition, the device diagnostics and the calibration of a field device (8, 9, 10, 26, 27), in a cloud (13), wherein the field device (8, 9, 10, 26, 27) has a self-monitoring functionality, wherein said procedure comprises the following steps:
Device-internal capturing of first data concerning at least one of the following: the device condition, the device diagnostics and the calibration by the field device (8, 9, 10, 26, 27) itself, comprising the execution of a device self-test, wherein at least one of the following is checked in the course of a self-test: a sensor of the field device, an evaluation electronics unit of the field device, at least a memory of the field device, and IO unit of the field device, at least a connection cable of the field device, an output signal of the field device,
Transmission of the first data captured internally in the device from the field device (8, 9, 10, 26, 27) to the cloud (13), said data comprising the result of the device self-test,
Capturing of second data concerning at least one of the following: the device condition, the device diagnostics and the calibration of the field device (8, 9, 10, 26, 27) by means of an external service computer (16, 30) and transmission of the second data from the external service computer (16, 30) to the cloud (13),
wherein the external service computer is designed to capture calibration data of the field device within the framework of a calibration, wherein the second data transmitted by the external service computer to the cloud comprises at least part of the captured calibration data of the field device,
wherein both the first data and the second data are saved in the cloud (13),
wherein the data transmitted to the cloud are saved in entries that are assigned to a specific field device, wherein an entry in the cloud for a field device can be identified on the basis of a characteristic identifier of the field device.

2. Procedure as claimed in Claim 1, **characterized in that** the field device is designed to capture, internally in the device, data regarding at least one of the following, i.e. the device condition and the device diagnostics, according to a predefined time pattern, and to transmit the data to the cloud.

3. Procedure as claimed in Claim 1 or 2, **characterized by** the following:
- the field device is designed to assign captured data concerning at least one of the following, i.e. device condition and the device diagnostics, from a group of predefined device conditions.

4. Procedure as claimed in one of the Claims 1 to 3, **characterized in that** the first data captured internally in the device is transmitted to the cloud via a first data transmission path and the second data captured by the external service computer is transmitted to the cloud via a second data transmission path which is different from the first data transmission path.

5. Procedure as claimed in Claim 4, **characterized by** at least one of the following elements:
- the field device is part of a first fieldbus network and the first data captured internally in the device is transmitted to the cloud via a first data transmission path, wherein the first data transmission path extends from the field device to the cloud via the first fieldbus network;
- the field device is part of a first fieldbus network and the first fieldbus network comprises an edge device, wherein the first data captured internally in the device is transmitted to the cloud via a first data transmission path, and wherein the first data transmission path extends from the field device to the cloud via the first fieldbus network and the edge device;
- the first data captured internally in the device is transmitted to the cloud via a first data transmission path and the second data captured by the external service computer is transmitted to the cloud via a second data transmission path that is different to the first data transmission path, wherein the second data transmission path extends from the external service computer to a central data processing unit, and from there to the cloud.

6. Procedure as claimed in one of the Claims 1 to 5, **characterized by** at least one of the following:
- the external service computer is designed to transmit data to a central data processing unit via a data connection, wherein at least part of the data stored in the central data processing unit is transmitted to the cloud via an additional data connection.

7. Procedure as claimed in one of the Claims 1 to 6, **characterized in that** the characteristic identifier is one of the following: the manufacturer and serial number of the field device, a UUID of the field device, a MAC address of a network card of the field device, a unique identifier of a SIM card of the field device.

8. Procedure as claimed in one of the Claims 1 to 6, **characterized by** the following additional step:
Retrieval of at least part of the first data and of at least part of the second data concerning one or more field devices from the cloud by an evaluation unit that is designed to evaluate and/or present the retrieved data.

9. Procedure as claimed in Claim 8, **characterized by** at least one of the following:
- the evaluation unit is designed to jointly present first data and second data relating to a field device on a display;
- the evaluation unit is designed to evaluate the first and second data for the calibration of a field device depending on the time of data capture and to determine a drift in the measured value of the field device.

10. Procedure as claimed in one of the Claims 1 to 9, **characterized in that** the field device is part of a first fieldbus network, wherein said procedure comprises the following additional steps:
device-internal capturing of additional first data concerning at least one of the following: the device condition, the device diagnostics and the calibration by a second field device, wherein said second device is connected to a second fieldbus network, wherein the second fieldbus network is different to the first fieldbus network, and transmission of the additional first data captured internally in the device from the second field device to the cloud, and
capturing of additional second data concerning at least one of the following: the device condition, the device diagnostics and the calibration of a second field device, wherein said second device is connected to a second fieldbus network, by means of the external service computer or by means of an additional external service computer, and transmission of the additional second data from the external service computer to the cloud.

11. Procedure as claimed in Claim 10, **characterized in that** the first fieldbus network is situated in a first location and **in that** the second fieldbus network is situated in a second location that is different to the first location.

12. Procedure as claimed in Claim 10 or 11, **characterized by** at least one of the following:
- the evaluation unit is designed to retrieve at least part of the first data and at least part of the second data of multiple field devices from the cloud, and evaluate them and/or show them on a display;
- the evaluation unit is designed to retrieve from the cloud at least part of the first data and at least part of the second data concerning multiple field devices that are located in different locations and/or in different fieldbus networks, and evaluate them and/or show them on a display;
- the evaluation unit is designed to select field devices, for which first data and/or second data are saved in the cloud, according to at least a predefinable selection criterion, to retrieve data of the selected field devices from the cloud and to jointly evaluate and/or display them;
- the evaluation unit is designed to select field devices, for which first data and/or second data are saved in the cloud, according to at least a predefinable selection criterion, to retrieve data of the selected field devices from the cloud and to jointly evaluate and/or display them, wherein the at least one predefinable selection criterion is at least one of the following criteria: device type, measuring principle, operating conditions of the field device.

13. Procedure as claimed in one of the Claims 7 to 11, **characterized in that**
- the evaluation unit is designed to select field devices, for which first data and/or second data are saved in the cloud, according to at least a predefinable selection criterion, to retrieve data of the selected field devices from the cloud and to determine, on the basis of the data retrieved, an average device behavior that can be used as a performance reference for field devices of the particular kind.

14. Procedure as claimed in one of the Claims 7 to 13, **characterized by** one of the following:
- the evaluation unit is designed as an evaluation unit that can be executed in the cloud;
- the evaluation unit is designed as an evaluation unit that can be executed on a third-party computer and is designed to retrieve data from the cloud from the third-party computer.

15. A fieldbus system, wherein said system is designed to execute a procedure as claimed in one of the Claims 1 to 14, comprising:
a field device (8, 9, 10, 26, 27) that has a self-monitoring functionality and that is designed to capture - internally in the device - first data concerning at least one of the following: the device condition, the device diagnostics and the calibration of the field device (8, 9, 10, 26, 27),
a cloud (13), wherein the first data captured internally in the device can be transmitted from the field device (8, 9, 10, 26, 27) to the cloud (13),
wherein second data - concerning at least one of the following, i.e. the device condition, the device diagnostics and the calibration of the field device (8, 9, 10, 26, 27) - can be captured by means of an external service computer (16, 30) and transmitted to the cloud (13), and
wherein the data saved in the cloud (13) comprise both the first data captured internally in the device and the second data captured by the external service computer (16, 30).

## Revendications

1. Procédé destiné au stockage de données concernant au moins l'un parmi les éléments suivants, à savoir l'état de l'appareil, le diagnostic de l'appareil et l'étalonnage d'un appareil de terrain (8, 9, 10, 26, 27), dans un cloud (13), l'appareil de terrain (8, 9, 10, 26, 27) comportant une fonctionnalité d'autosurveillance, lequel procédé comprend les étapes suivantes :
Acquisition interne à l'appareil de premières données concernant au moins l'un parmi les éléments suivants, à savoir l'état de l'appareil, le diagnostic de l'appareil et l'étalonnage par l'appareil de terrain (8, 9, 10, 26, 27) lui-même, comprenant l'exécution d'un autotest de l'appareil, au moins l'un des éléments suivants étant contrôlé dans le cadre d'un autotest : un capteur de l'appareil de terrain, une électronique d'évaluation de l'appareil de terrain, au moins une mémoire de l'appareil de terrain, un dispositif d'E/S de l'appareil de terrain, au moins une ligne de raccordement de l'appareil de terrain, un signal de sortie de l'appareil de terrain,
Transmission à partir de l'appareil de terrain (8, 9, 10, 26, 27) des premières données acquises de manière interne à l'appareil vers le cloud (13), lesquelles données comprennent le résultat de l'autotest de l'appareil,
Acquisition de deuxièmes données concernant au moins l'un parmi les éléments suivants, à savoir l'état de l'appareil, le diagnostic de l'appareil et l'étalonnage de l'appareil de terrain (8, 9, 10, 26, 27) au moyen d'un ordinateur de service externe (16, 30) et transmission des deuxièmes données de l'ordinateur de service externe (16, 30) vers le cloud (13), l'ordinateur de service externe étant conçu pour acquérir des données d'étalonnage de l'appareil de terrain dans le cadre d'un étalonnage, les deuxièmes données transmises vers le cloud par l'ordinateur de service externe comprenant au moins une partie des données d'étalonnage acquises, relatives à l'appareil de terrain,
aussi bien les premières données que les deuxièmes données étant mémorisées dans le cloud (13), les données transmises au cloud étant mémorisées dans des entrées qui sont respectivement associées à un appareil de terrain déterminé, une entrée dans le cloud concernant un appareil de terrain étant identifiable à l'aide d'un identifiant caractéristique de l'appareil de terrain.

2. Procédé selon la revendication 1, **caractérisé en ce que** l'appareil de terrain est conçu pour acquérir de manière interne à l'appareil des données sur au moins l'un parmi les éléments suivants, à savoir l'état de l'appareil et le diagnostic de l'appareil selon un schéma temporel prédéfini, et pour les transmettre au cloud.

3. Procédé selon la revendication 1 ou 2, **caractérisé par** l'élément suivant :
- l'appareil de terrain est conçu pour attribuer des données acquises concernant au moins l'un des états de l'appareil et le diagnostic de l'appareil à l'un parmi un ensemble d'états d'appareil prédéfinis.

4. Procédé selon l'une des revendications 1 à 3, **caractérisé en ce que** les premières données acquises de manière interne à l'appareil sont transmises au cloud via un premier chemin de transmission de données et les deuxièmes données acquises à partir de l'ordinateur de service externe sont transmises au cloud via un deuxième chemin de transmission de données différent du premier chemin de transmission de données.

5. Procédé selon la revendication 4, **caractérisé par** au moins un des éléments suivants :
- l'appareil de terrain fait partie d'un premier réseau de bus de terrain et les premières données acquises de manière interne à l'appareil sont transmises vers le cloud via un premier chemin de transmission de données, le premier chemin de transmission de données s'étendant de l'appareil de terrain au cloud via le premier réseau de bus de terrain ;
- l'appareil de terrain fait partie d'un premier réseau de bus de terrain et le premier réseau de bus de terrain comprend un Edge Device, les premières données acquises à l'intérieur de l'appareil étant transmises vers le cloud via un premier chemin de transmission de données, et le premier chemin de transmission de données s'étendant de l'appareil de terrain au cloud via le premier réseau de bus de terrain et l'Edge Device ;
- les premières données acquises de manière interne à l'appareil sont transmises au cloud via un premier chemin de transmission de données et les deuxièmes données acquises par l'ordinateur de service externe sont transmises au cloud via un deuxième chemin de transmission de données différent du premier chemin de transmission de données, le deuxième chemin de transmission de données s'étendant de l'ordinateur de service externe à un dispositif central de traitement de données, et de là encore au cloud.

6. Procédé selon l'une des revendications 1 à 5, **caractérisé par** au moins l'un des éléments suivants :
- l'ordinateur de service externe est conçu pour transmettre des données à un dispositif central de traitement de données par l'intermédiaire d'une liaison de données, au moins une partie des données stockées dans le dispositif central de traitement de données étant transmise au cloud par l'intermédiaire d'une autre liaison de données.

7. Procédé selon l'une des revendications 1 à 6, **caractérisé en ce que** l'identifiant caractéristique est l'un des suivants : le fabricant et le numéro de série de l'appareil de terrain, un UUID de l'appareil de terrain, une adresse MAC d'une carte réseau de l'appareil de terrain, un identifiant unique d'une carte SIM de l'appareil de terrain.

8. Procédé selon l'une des revendications 1 à 6, **caractérisé par** l'étape supplémentaire suivante :
Récupération d'au moins une partie des premières données et d'au moins une partie des deuxièmes données concernant un ou plusieurs appareils de terrain à partir du cloud par une unité d'évaluation qui est conçue pour évaluer et/ou représenter les données récupérées.

9. Procédé selon la revendication 8, **caractérisé par** au moins l'un des éléments suivants :
- l'unité d'évaluation est conçue pour représenter en commun sur un écran les premières données et les deuxièmes données relatives à un appareil de terrain ;
- l'unité d'évaluation est conçue pour évaluer les premières et deuxièmes données pour l'étalonnage d'un appareil de terrain en fonction de l'instant d'acquisition des données et pour déterminer une dérive de la valeur mesurée de l'appareil de terrain.

10. Procédé selon l'une des revendications 1 à 9, **caractérisé en ce que** l'appareil de terrain fait partie d'un premier réseau de bus de terrain, le procédé comprenant les étapes supplémentaires suivantes :
l'acquisition de manière interne à l'appareil de premières données supplémentaires concernant au moins l'un parmi les éléments suivants, à savoir l'état de l'appareil, le diagnostic de l'appareil et l'étalonnage par un deuxième appareil de terrain, lequel deuxième appareil est raccordé à un deuxième réseau de bus de terrain, le deuxième réseau de bus de terrain étant différent du premier réseau de bus de terrain, et la transmission des premières données supplémentaires acquises de manière interne à l'appareil à partir du deuxième appareil de terrain vers le cloud, et
l'acquisition de deuxièmes données supplémentaires concernant au moins l'un parmi les éléments suivants, à savoir l'état de l'appareil, le diagnostic de l'appareil et l'étalonnage d'un deuxième appareil de terrain, lequel deuxième appareil est raccordé à un deuxième réseau de bus de terrain, au moyen de l'ordinateur de service externe ou au moyen d'un autre ordinateur de service externe, et la transmission des deuxièmes données supplémentaires à partir de l'ordinateur de service externe vers le cloud.

11. Procédé selon la revendication 10, **caractérisé en ce que** le premier réseau de bus de terrain est situé à un premier emplacement et **en ce que** le deuxième réseau de bus de terrain est situé à un deuxième emplacement différent du premier emplacement.

12. Procédé selon la revendication 10 ou 11, **caractérisé par** au moins l'un des éléments suivants :
- l'unité d'évaluation est conçue pour appeler au moins une partie des premières données et au moins une partie des deuxièmes données de plusieurs appareils de terrain à partir du cloud, et les évaluer et/ou les représenter sur un écran ;
- l'unité d'évaluation est conçue pour appeler à partir du cloud au moins une partie des premières données et au moins une partie des deuxièmes données concernant plusieurs appareils de terrain qui se trouvent à différents endroits et/ou dans différents réseaux de bus de terrain, et pour les évaluer et/ou les représenter sur un écran ;
- l'unité d'évaluation est conçue pour sélectionner des appareils de terrain, pour lesquels des premières données et/ou des deuxièmes données sont enregistrées dans le cloud, selon au moins un critère de sélection pouvant être prédéfini, pour récupérer des données d'appareils de terrain sélectionnés dans le cloud et pour les évaluer et/ou les représenter en commun ;
- l'unité d'évaluation est conçue pour sélectionner des appareils de terrain, pour lesquels des premières données et/ou des deuxièmes données sont enregistrées dans le cloud, selon au moins un critère de sélection pouvant être prédéfini, pour récupérer des données d'appareils de terrain sélectionnés dans le cloud et pour les évaluer et/ou les représenter en commun, l'au moins un critère de sélection pouvant être prédéfini étant au moins l'un parmi les critères suivants : type d'appareil, principe de mesure, conditions d'utilisation de l'appareil de terrain.

13. Procédé selon l'une des revendications 7 à 11, **caractérisé en ce que**
- l'unité d'évaluation est conçue pour sélectionner des appareils de terrain, pour lesquels des premières données et/ou des deuxièmes données sont enregistrées dans le cloud, selon au moins un critère de sélection pouvant être prédéfini, pour récupérer des données d'appareils de terrain sélectionnés dans le cloud et pour déterminer, à partir des données récupérées, un comportement moyen des appareils qui peut être utilisé comme référence de performance pour des appareils de terrain du type concerné.

14. Procédé selon l'une des revendications 7 à 13, **caractérisé par** l'un des éléments suivants :
- l'unité d'évaluation est conçue comme une unité d'évaluation exécutable dans le cloud ;
- l'unité d'évaluation est conçue comme une unité d'évaluation exécutable sur un ordinateur tiers et est conçue pour appeler des données du cloud à partir de l'ordinateur tiers.

15. Système de bus de terrain, lequel système est conçu pour la réalisation d'un procédé selon l'une des revendications 1 à 14, comprenant :
un appareil de terrain (8, 9, 10, 26, 27) qui présente une fonctionnalité d'autosurveillance et qui est conçu pour acquérir, de manière interne à l'appareil, des premières données concernant au moins l'un parmi les éléments suivants, à savoir l'état de l'appareil, le diagnostic de l'appareil et l'étalonnage de l'appareil de terrain (8, 9, 10, 26, 27),
un cloud (13), les premières données acquises de manière interne à l'appareil pouvant être transmises de l'appareil de terrain (8, 9, 10, 26, 27) au cloud (13), des deuxièmes données - concernant au moins l'un parmi les éléments suivants, à savoir l'état de l'appareil, le diagnostic de l'appareil et l'étalonnage de l'appareil de terrain (8, 9, 10, 26, 27) - pouvant être acquises au moyen d'un ordinateur de service externe (16, 30) et transmises au cloud (13), et
les données enregistrées dans le cloud (13) comprenant aussi bien les premières données acquises de manière interne à l'appareil que les deuxièmes données acquises par l'ordinateur de service externe (16, 30).
